Europäisches Patentamt

European Patent Office

Office européen des brevets

(11) Publication number: **0 065 362**
**A1**

# (12) EUROPEAN PATENT APPLICATION

(21) Application number: **82302111.8**

(22) Date of filing: **23.04.82**

(51) Int. Cl.³: **G 02 B 5/24**

(30) Priority: **27.04.81 GB 8112851**

(43) Date of publication of application: **24.11.82**
Bulletin 82/47

(84) Designated Contracting States: **DE FR GB**

(71) Applicant: Fenner, David Fenton, 2 Bishop's Green
Barnston, Great Dunmow Essex (GB)

(72) Inventor: Fenner, David Fenton, 2 Bishop's Green
Barnston, Great Dunmow Essex (GB)

(74) Representative: Messulam, Alec Moses, A. Messulam &
Co. 24 Broadway, Leigh on Sea Essex SS9 1BN (GB)

(54) **Light filter.**

(57) The invention relates to a light filter for use in front of a camera lens or a light projector. The light filter comprises two transparent plates (15, 17, 19) which are movable relative to one another and define between them a chamber (7, 9, 11) filled with a coloured fluid. By varying the separation between the plates, the effective density of the filter can be varied between zero and full saturation. If three filters of different primary colours are arranged in line, the hue and saturation of light given off by a projector (1) can be varied at will.

# LIGHT FILTER

This invention relates to light filters for use with a lens, a light projector or the like.

A known method of producing coloured light is by mounting colour filters in front of a source of light. The filters are occasionally glass, but are more often of dyed gelatine or a plastics material. The change in colour is effected by changing the filter. Filters are usually available in over sixty colours. The filters are mounted either in frames or in a wheel. For quick automatic changing, a wheel containing about six filters is rotated to bring the desired filter in front of the source of light. Another system includes a filter carried by semaphore arms. In such a system there may be about six semaphore arms each controlled remotely. A motor moves a desired arm or arms in front of the lamp. In the photographic industry filters are often mounted in the form of drawers that are inserted or withdrawn in slides in front of the camera lens.

Alternatively, for stage lighting and in the photographic industry, three separate lamps are sometimes used (or multiples of three), each lamp being mounted in front of a primary colour filter. Different colours may be obtained by dimming one or more of the lamps.

The disadvantages of these existing systems are as follows:-

(a)    only about six of the available colours can be used with any one lamp;

2 0065362

(b)    The filters must be fitted in advance of their use;

(c)    A change of colour can only be achieved in discreet steps.

(d)    When a lighting set is being set up and designed it is necessary to change several filters to observe the effect achieved.

(e)    If more than about six colours are required between the periods that access can be gained to the lamps, then more lamps must be utilized at the expense of space and cost;

(f)    With the three lamp primary colour system the total light output is only one-third of that for the power used;

(g)    The gelatine filters have a short life when used with high power lamps.

According to a first aspect of the invention, there is provided a light filter comprising a chamber having aligned transparent parts and adapted to contain a fluid, and means for varying the volume of fluid in the chamber so that the distance traversed by light rays through the fluid between the transparent parts may be continuously varied.

The fluid may be coloured so that it absorbs light rays of colours other than those of the fluid.

A filter according to this invention may advantageously be used with lighting systems which may inter alia be used for theatrical, television and film stages, displays,

0065362

psychedelic effects, and it may also be used in the photographic industry.

According to a second aspect of the invention there is provided, a lighting system comprising a housing containing a source of light, two or more coloured filters as described above arranged such that the transparent parts are in the path of the rays from the light source; and means for varying the relative volumes of the fluids in the chambers to produce light of varying hue.

Preferably there are three chambers containing fluids of different primary colours; the light source is a source of white light; and the device is such that the distances through the three fluids traversed by light rays pass may be varied whereby the hue of the rays of light emitted by the system may be varied as desired.

Advantageously each chamber has a pair of parallel walls; the transparent parts are located in the latter walls; the walls are normal to the direction of light rays emitted from the light source; and the walls are movable from a position such that there is no fluid between them to a position such that all light having a wavelength different from that of the colour of the fluid is absorbed.

The invention will now be described further, by way of example with reference to the accompanying drawings, in which;

Figure 1 is a perspective view of a lighting system according to this invention which can be fitted with any three of the forms of the invention shown in Figures 2 to 4;

Figure 2 is a section through part of one system according to the invention;

Figure 3 is a section through part of another form of the invention; and

Figure 4 is a section through part of yet another form of the invention.

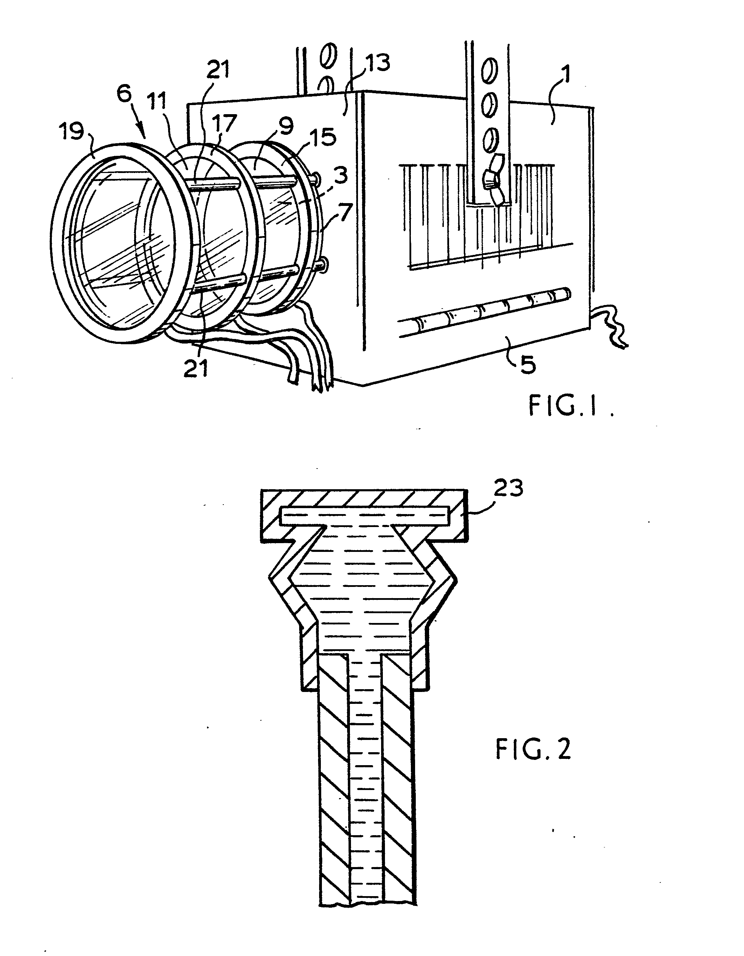

The lighting system shown in Figure 1 comprises an essentially conventional projector 1 which in use emits white light through an aperture 3 in a housing 5 and three filters 6.

Three fluid chambers 7, 9 and 11 are located in front of the aperture 3. The chambers contain respectively red, yellow and violet fluid. The light rays emitted through the aperture 3 pass through the liquids in the chambers.

The system includes means for continuously altering the distances that the light rays pass through the three liquids between zero and a maximum distance at which substantially all light except that of the relevant colour is absorbed. As a result the colour of the light emitted from the chamber remote from the aperture 3 may be varied from white to any desired colour. White light is emitted when the rays do not pass through any red, yellow or violet liquid.

The means include a device for varying the volume of each chamber and the volume of each chamber is respectively infinitely variable such that all rays of the wavelengths of light other than red, yellow or violet light, respectively, are absorbed and a volume such that virtually no rays are absorbed.

Each chamber 7, 9 and 11 has a pair of parallel walls. The first chamber 7 lies between the wall 13 constituted by the front face of the housing 5 and the wall 15, while chambers 9 and 11 lie between walls 15, 17 and 17, 19, respectively.

The walls 15, 17 and 19 each have aligned transparent parts and are slidably mounted on four rods 21 projecting from the face 5 of the chamber.

The chamber 7 is filled with red liquid; the chamber 9 is filled with yellow liquid; and the chamber 11 is filled with violet liquid. As the wall 15 is moved away from the front face 13 of the housing of the projector, red liquid is drawn into the chamber 7 and yellow liquid is displaced from the chamber 9; and as the wall 17 is moved away from the face 5, the yellow liquid is drawn into the chamber 9, and the red liquid is displaced from the chamber 11. The walls 15, 17 and 19 are movable on the rods 21 so that in one position adjacent walls are contiguous and no liquid is contained between them.

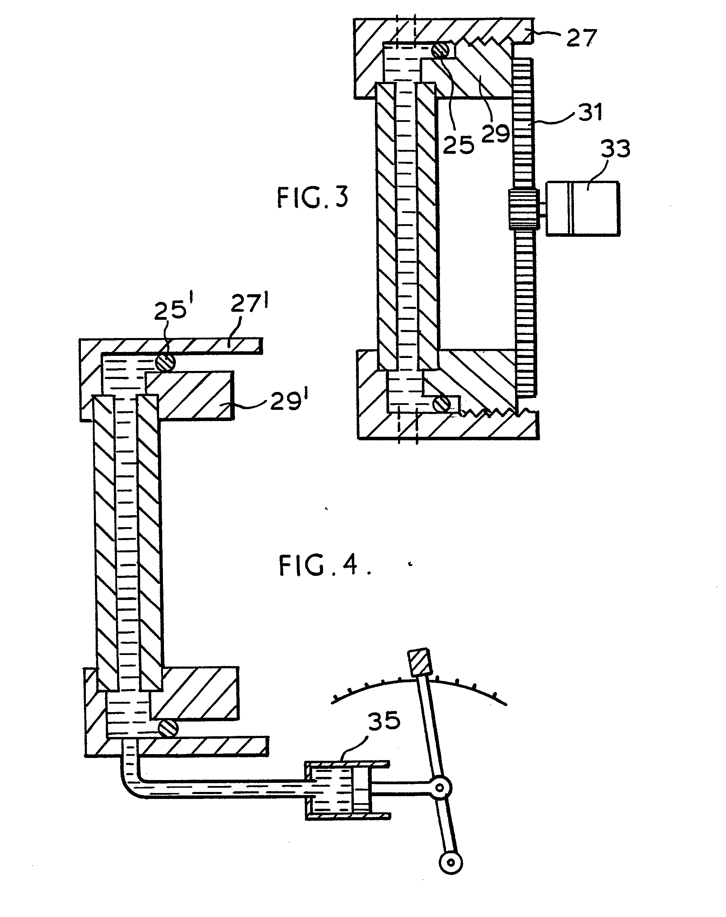

The walls may be moved by any convenient mechanism. Two such mechanisms are shown in Figures 3 and 4. The mechanisms are controlled by a control device (not shown) which links the means for varying the volume of the liquid so that any desired hue of light is emitted from the wall 19 of the chamber 11. A change from one hue to another may require movement of one wall alone; two walls; or often three walls. The control device for achieving this individual or simultaneous movement of the walls to achieve the desired hue and degree of saturation may employ modern micro-chip technology.

Various possible mechanical features of the system are shown in Figures 2 to 4. Figure 2 shows diagramatically an expansible circular seal 23 which engages adjacent walls of the chamber. Such a seal may be combined with the seals for the other two chambers, the adjacent faces of the seals being bonded together. Each of the seals has an opening (not shown) through which liquid can be admitted to or withdrawn from its associated chamber.

In Figure 4 the seal is in the form of an O-ring 25 between adjacent walls of a chamber, and means for altering the distance apart of the walls. The means comprises threaded flanges 27 and 29 on adjacent walls of the chamber and an internal ring gear 31 on one of the flanges, the other flange being prevented from rotating. This ring gear is engaged by an electric motor 33. As the motor turns in one direction, the walls are moved closer together; and as the motor is moved in the opposite direction the walls are moved apart. The motor is controlled by the control device.

The embodiment in Figure 4 is similar to that shown in Figure 3 except that the flanges 27' and 29' are not threaded, and the walls are instead moved by a hydraulic pump 35. The latter is controlled by the control device previously mentioned.

Instead of the walls 17 and 19 being walls of two adjacent chambers (party walls), the chambers may be enclosed in another housing which excludes light, and each chamber may have its own individual walls. In such a case it would be possible to achieve a change in the hue of the light emitted by movement of one of the inner walls altering only one primary colour at a time. This would of course simplify the control device.

The liquid in the chambers comprises the desired pigment dissolved in a neutral colour oil-based liquid.

It will be noted that the filters allow not only the hue but also the colour saturation to be varied continuously. Furthermore, by using equal amounts of the three primary colours, a variable neutral density (grey) filter effect may be achieved.

## CLAIMS

1.    A light filter for fitting in front of a camera lens, a light projector and the like, characterised by a chamber (7,9,11) having aligned transparent parts and containing a fluid, and means for varying the volume of fluid in the chamber so  that the distance traversed by light rays through the fluid between the transparent plates may be continuously varied.

2.    A light filter according to Claim 1, in which the fluid is coloured so as to absorb light rays of colours other than those of the fluid.

3.   A lighting system comprising a housing (5) containing a source of light, and characterised by two or more filters, each in accordance with Claim 2, arranged so that all the transparent parts are in the path of the rays from the light source; and means (33, 35) for varying the relative volumes of the said fluids in the chambers to produce light of varying hue.

4.    A lighting system according to Claim 3, in which there are three chambers (7,9,11) containing respectively red, yellow and violet fluids, and the light source is a source of white light, and in which the fluid contents of the three chambers are variable to allow any desired hue and saturation to be achieved.

5.    A lighting system according to Claim 4 in which each chamber has a pair of parallel walls (15,17,19); the transparent parts are located in the latter walls; the walls are normal to the direction of the light rays emitted from the light source; and the walls are movable from a position such that there is substantially no fluid between them to a position such that substantially all light having a wavelength different from that of the colour of the fluid is absorbed.

6.    A lighting system according to Claim 5 in which an expansible circular seal (23) engages the adjacent walls of each chamber, and each seal has an opening through which the fluid can be admitted to or withdrawn from the chamber.

7.    A lighting system according to Claim 5 in which each parallel wall of each chamber has a cylindrical flange (27,29), the flanges overlap, the gap between the flanges is sealed by an O-ring (25) and the flanges have inter-engaging threaded parts whereby when one flange is rotated relatively to the other the volume of the fluid in the chamber is varied (Fig.3).

8.    A lighting system according to Claim 5, in which each parallel wall of each chamber has a cylindrical flange (27',29'), the flanges overlap, the gap between the flanges is sealed by an O-ring (25), and a pump (35) is operative to pump liquid into or withdraw liquid from each chamber (Fig.4).

FIG.I.

FIG.2

FIG.3

27

31

33

25 29

FIG.4.

25' 27'

29'

35

# EUROPEAN SEARCH REPORT

European Patent Office

0065362

EP 82 30 2111

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | US-A-3 572 907 (I.CINDRICH) *Claims; figure 1* | 1,5,7 | G 02 B 5/24 |
| X | DE-A-2 014 732 (W.USINGER) *Page 2, lines 13-22; claims 1,3,5,6; figure 2* | 1,3,6, 7,8 | |
| A | US-A-4 070 101 (W.E.RICHARDS) *Abstract; figure 2* | 1 | |
| A | EP-A-0 015 010 (J.P.HANCHARD) *Abstract; figure 2* | 1 | |

TECHNICAL FIELDS SEARCHED (Int. Cl. 3)

G 02 B 5/24
G 02 B 1/06
G 02 B 3/12

The present search report has been drawn up for all claims

| Place of search | Date of completion of the search | Examiner |
|---|---|---|
| THE HAGUE | 11-08-1982 | PFAHLER R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82